# EUROPEAN PATENT APPLICATION

(11) **EP 4 717 424 A1**
(43) Date of publication of application: **01.04.2026**
(21) Application number: 24203723.2
(22) Date of filing: 30.09.2024
(51) Int. Cl.: B29B 11/16, B29C 70/38, B29C 33/00

(54) **MOLD ARRANGEMENT FOR MANUFACTURING PREFORM ELEMENTS FOR A WIND TURBINE BLADE**

(71) Applicant: Siemens Gamesa Renewable Energy A/S, 7330 Brande (DK)
(72) Inventor: Grøntved, Kasper Fuglsang, 9352 Dybvad (DK); Krogh, Christian, 9000 Aalborg (DK)
(74) Representative: SGRE-Association

(57) **Abstract**

The invention relates to a mold arrangement for manufacturing preform elements for a wind turbine blade, comprising a mold (2) having a mold surface (7) and two longitudinal sides (3, 4), on which mold surface (7) fiber plies (8) adapting to the shape of the mold surface (7) are arranged by means of a controllable pick-and-place device (9), and which pick-and-place device (9) comprises at least two separate robots (10, 11) arrangeable in a picking zone (14) at opposite sides of a fiber ply (8) to be arranged on the mold surface (7), each robot (10, 11) comprising a picking device (17, 18) for picking the fiber ply (8), wherein both robots (10, 11) are movable from the picking zone (14) to the mold (2) and along the longitudinal sides (3, 4) of the mold (2) to a placing position, wherein the robots (10, 11) are adapted to place the picked fiber ply (8) on the mold surface (7).

## Description

The invention refers to a mold arrangement for manufacturing preform elements for a wind turbine blade.

Preforming is a technology used for making wind turbine blades. The preforms are usually made of several fiber plies being arranged and fixated in a requested geometry, thereby building a preform element which can be handled and arranged in a blade manufacturing mold or arrangement. For manufacturing such a preform element a mold is used, which usually has a rectangular form. The mold is longer in the spanwise direction then it is wide in the chordwise direction. The mold has a mold surface, which usually is of trough-like or convex shape and which defines the shape of the preform elements to be produced. For producing the preform element separate fiber plies are usually manually arranged on the mold surface, which is a cumbersome work due to the dimensions of the separate plies. The mold usually has a length of at least 8 to 10 m and a width of at least 2 to 3 m, or even more in both directions, so that also the respective fiber plies, which extend in chordwise direction from one longitudinal side of the mold to the other longitudinal side, have a respective size. This size makes it also difficult to correctly arrange the respective separate fiber plies on the mold surface, which are arranged in an overlapping manner and also stacked above each other. The arrangement needs to be free of wrinkles.

It is an objective of the invention to provide a mold arrangement which allows for a simplified manufacturing of a preform element respectively for a simplified arrangement of the separate fiber plies on the mold.

For addressing this objective the invention provides a mold arrangement for manufacturing preform elements for a wind turbine blade, comprising a mold having a mold surface and two longitudinal sides, on which mold surface fiber plies adapting to the shape of the mold surface are arranged by means of a controllable pick-and-place device, which pick-and-place device comprises at least two separate robots arrangeable in a picking zone at opposite sides of a fiber ply to be arranged on the mold surface, each robot comprising a picking device for picking the fiber ply, wherein both robots are movable from the picking zone to the mold and along the longitudinal sides of the mold to a placing position, wherein the robots are adapted to place the picked fiber ply on the mold surface.

The invention allows for a fully automatic pick-and-place process for arranging the separate fiber plies on the mold surface exactly in the requested position without any manual handling. The mold arrangement comprises the mold having a mold surface and two longitudinal sides, as the mold, see above, usually has a rectangular shape with two longer sides extending in spanwise direction. The mold surface is shaped according to the needs of the geometry the finally built preform element shall have. On this mold surface the separate fiber plies shall be arranged.

For this purpose the mold arrangement comprises a pick-and-place device, which allows for a fully automatic picking, transporting and placing of the separate fiber applies in the requested position on the mold. The pick-and-place device comprises at least two separate robots, which are movable between a picking position, where a fiber ply is picked, and a placing position at the mold, where the fiber ply is arranged on the mold. The at least two separate robots are both arrangeable in a picking zone, where a fiber ply which is to be arranged on the mold surface is picked. They are arranged at opposite sides of the fiber ply, so that each robot comprising a picking device can pick preferably an edge of the fiber ply, but also any other area of the fiber ply. The picking devices are arranged at a movable arm of the robot, so that the picking device can be adjusted in its picking position to adapted to the fiber ply sizes. The picking devices are also adjustable to different ply widths, e.g. by adjusting the picking points, so that the plies may vary both in length and width. When both robots respectively both picking devices have picked for example the respective edge of the ply, the robots are moving from the picking zone to the mold and along the longitudinal sides of the mold to the placing position, where the ply shall be placed. After having reached the position the robots lower the ply and lay it on the mold surface, where it is arranged in the exact position, as both robots can be perfectly controlled by are a control device to move them exactly to the predetermined placing position. So, both robots pick the ply on opposite ends or edges of the ply, move it to the mold by moving along the opposite longitudinal sides of the mold to the placing position and arrange the ply on the mold surface, wherein at least the movement of both robots is synchronized by the control device, which may also control the picking action in a synchronized manner.

The inventive mold arrangement allows for a fully automatic picking and placing process, so that no manual work, which, as mentioned, is cumbersome, is needed for picking and placing the plies. The placement is very accurate, so that the finally built preform element is perfectly built. The manufacturing of the preform element is also faster, as no manual work is involved.

The mold arrangement may comprise only two robots, which are arranged opposite to each other at the ply to be picked and at both longitudinal mold sides. According to an embodiment of the invention, the pick-and-place device may also comprise four robots, with two robots arranged on each side. Two robots arranged next to each other make a robot pair, so that two pairs are arranged opposite to each other. As each robot comprises a picking device, it is possible to pick even larger fiber plies, compared to using only one robot at each side of the ply. As all four robots are controlled in a synchronized manner especially regarding the movement and also the picking, all actions are performed simultaneously, starting from the picking action via the transport to the final placing action.

As mentioned, the fiber ply to be picked is arranged in a picking zone. This picking zone may comprise a carrier like a pallet or a table on which a stack comprising several fiber plies is arranged. The fiber plies are already cut to the respective size and are stacked, so that for example a twenty or thirty or more plies are arranged in one stack. The robots are adapted to pick the top ply, which is separated from the stack and can then be transported and placed on the mold. The carrier may be stationary or movable, e.g. along the tracks of the robots or on separate tracks, so that it can be changed in its position if need be.

In an alternative to this arrangement comprising a ply stack it is possible that the picking zone may comprise a supply device for supplying a fiber material and a cutting device for cutting the plies from the fiber material. This supply device may comprise a roll of an endless fiber material. The fiber material is unwound from the roll and delivered to a cutting device, which cuts the single fiber plies from the endless role. The cutting device for example comprises a transporting or pulling device for removing the fiber material on a cutting table, so that the finally cut fiber ply lies on this cutting table. The robots are arranged such that they can pick the cut ply without any further transport, for example directly from the cutting table.

As mentioned, each robot comprises a picking device, which may also be named as an end effector. Each picking device is adapted to pick the fiber ply, which is for example a fiber fabric or textile made of uni or multi directional extending fibers or fiber bundles or the like. The picking device is adapted to pick the fiber ply however it is made. The picking device may for example comprise suction means like a Bernoulli gripper or gripping means like a needle gripper. The respective suction or gripping means is arranged at the end of a movable robot arm, so that it can easily be moved and adapted in its picking position. The picking device may also comprise both suction means and gripping means. This embodiment allows for, first, picking and lifting the edge or corner of the ply with the suction means (because of the permeability, only the top ply is lifted) and subsequently engaging the gripping means, e.g. the needles of the needle gripper The movable rotor arm may be arranged at another movable rotor arm, which is movably arranged at a base, by which the robot is movably arranged on guiding means for the longitudinal movement. There are several degrees of freedom for moving the respective picking device.

In a further embodiment of the invention at least one robot comprises a shaping tool movable by the robot in a chordwise direction over the arranged fiber ply for draping and/or consolidating the arranged ply or plies. This shaping tool allows for smoothening and ensuring the mold conformity of the ply arranged on the mold surface especially in the center region of the ply, i.e. distanced from the ends of the ply. The shaping tool, for example a flexible roller, is movable by means of the robot from one longitudinal side to the other longitudinal side of the mold respectively from one edge of the ply to the other edge of the ply, thereby sliding or rolling over the ply and consolidating and draping its arrangement.

While they shaping tool may be separately arranged at the robot or the robot arm and be moved by a separate extending means of the robot with the ply still fixated by the picking means, it is also possible that the shaping tool is arranged at the picking device. In this embodiment the fiber ply being arranged in its final position is only held by one picking device. The other picking device comprising the shaping tool has released the ply and can be moved across the ply towards the other side, while consolidating the ply on the way.

The fiber ply may be a simple ply only comprising the respective fibers without any coating comprising a binder. If such fiber plies are arranged in the mold, they are, after the layup, finally fixated by means of a resin infusion. In an alternative a fiber ply comprising a binder or binder coating may be used. This binder may be activated after the layup for fixating all the plies and layers to each other in order to fixate the layup in the defined shape. If such fiber plies comprising a binder or binder coating are used, a preferred embodiment of the invention proposes that at least one robot comprises a heating device for locally applying heat to an arranged ply. By means of this heating device a ply being arranged in its placing position may locally be heated, so that the binder locally melts or gets sticky and fixates the arranged ply to an underlying ply which has already been positioned on the mold surface. This allows for locally fixating the continuously built fiber ply layup and fixates the respective plies in their exact position. Preferably all robots are provided with such a heating device, so that the respective ply can be fixated at both ends or edges or any other point on the ply surface to an underlying ply by this kind of spot welding. The heating device may for example be conduction heating device. Also, an ultrasound heating device, may be used, which heats the binder by internal friction due to the particle movement induced by the ultrasonic waves.

Preferably the heating device is arranged at the picking device. As the picking device is already in contact with the ply it is advantageous to arranged also the heating device at the picking device, so that the heat can be directly transferred to the ply in the picked region.

The picking device therefore is preferably a multi-purpose device. It comprises the picking means like for example the suction means or the gripper means. It may also comprise the shaping tool. And it may also comprise the heating means. A fully equipped picking means therefore serves all three purpose is, i.e. gripping, rolling and heating. Referring to two opposite robots with separate picking devices, one picking device may be equipped with all three items or functions, i.e. the picking means, the shaping tool and the heating means, while the other opposite picking device may only be equipped with the picking means and the heating means. Certainly, no heating means is necessary when no fiber ply is having a binder or binder coating are processed.

In a further embodiment the picking device may also be adapted to pick three-dimensional elements to be arranged on the mold surface or the arranged fiber plies. Preform elements often comprise embedded three-dimensional elements, also named as core elements. These elements are for example made of balsa wood or foam, but also other materials may be used. The picking device according to this embodiment is also adapted to pick such items, for which it may comprise additional picking elements like tongs or suction elements or the like. A fully equipped picking device may therefore also serve this purpose, so it in total may serve four purposes, i.e. gripping ply, rolling ply, heating ply and gripping elements.

As mentioned, the robots are movable from the picking zone to the mold and along both longitudinal mold sides. For this purpose the robots may be arranged on tracks extending from the picking zone to the mold and along the longitudinal sides of the mold. The robots are arranged and guided on these floor-mounted tracks. For the moving operation the robots may be provided with the respective drive means, which may for example interact with the respective track. For example, the track may have a toothing, which meshes with a toothed wheel of the drive means. In an alternative the track may also be a simple track and the drive means may for example comprise respective friction rolls rolling on the bottom surface or the like. Instead of tracks, each robot could also be arranged on a movable platform. Similarly, also the mold could be arranged on a movable platform. Any arrangement, which allows for the robots, the mold and, if provided, the carrier being movable relative to each other is suitable.

Finally, a control device may be provided for controlling the robots. This control device is preferably a common control device which controls all robots of the mold arrangement and preferably all controllable actions either performed by the robot itself or by any of the attachment parts of the robot. The control means may therefore control the movement of the robots by controlling the drive means, it may control the picking device like the suction means of gripping means, it may control the shaping tool movement, it may control the heating device and it may control the element picking means of the picking device. Additionally, the control device may also control the supply and cutting device, if provided.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1: a principal illustration of an inventive mold arrangement,
- fig. 2: the robots of the mold arrangement of fig. 1 in the picking position for picking a fiber ply, with each robot having a picking device comprising picking means for picking both the ply and a three-dimensional element, and heating means,
- fig. 3: a principal illustration of the mold arrangement with one robot being provided with a picking device also comprising a shaping tool, in the first position,
- fig. 4: the arrangement of fig. 3 with the robot being in a second position, and
- fig. 5: a principal illustration of an inventive mold arrangement comprising a supply and cutting device.

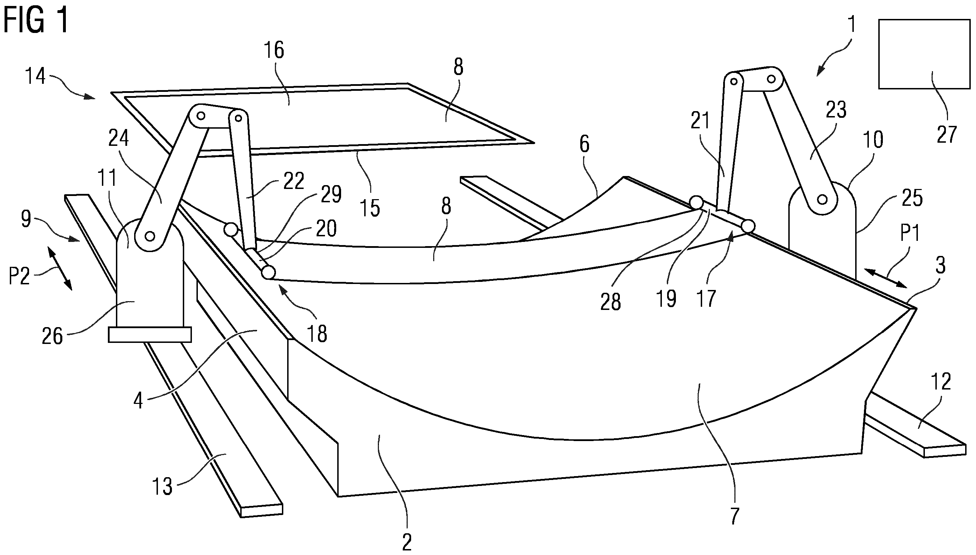

Fig. 1 shows a principal illustration of an inventive mold arrangement 1 adapted for manufacturing preform elements for a wind turbine blade. The mold arrangement 1 comprises a mold 2 having a rectangular shape. The mold 2 is longer in the spanwise direction that it is wide in the chordwise direction. It has two longitudinal sides 3, 4 extending in the spanwise direction and two transverse sides 5, 6 extending rectangular to the longitudinal sides 3, 4. Further the mold 2 has a trough-like mold surface 7 adapted to receive preform elements building material in form of fiber plies 8.

Further the mold arrangement 1 comprises a controllable pick-and-place device 9 comprising in this embodiment two robots 10, 11. Each robot 10, 11 is arranged at a longitudinal side 3, 4 of the mold 2. The robot 10 is arranged at the longitudinal side 3, the robot 11 is arranged at the longitudinal side 4. So, they are arranged at opposite sides. Both robots 10, 11 are arranged on respective tracks 12, 13, and these tracks extend along the longitudinal sides 3, 4 of the mold and further into a picking zone 14, in which picking zone 14 the robots 10, 11 can pick the fiber plies 8 to be arranged on the mold surface 7. The picking zone 14, in this example, comprises a carrier 15 like a table or a pallet, on which a stack 16 comprising a number of stacked separate fiber plies 8 is arranged. The robots 10, 11 can move along the tracks 12, 13, see the arrows P1 and P2, into the picking zone 14, pick the top fiber ply 8 of this stack 16 and move back to the mold 2, where they stop at a predetermined placing position, lower the picked fiber ply 8 on the mold surface 7 and arrange it at a predetermined position.

For picking a fiber ply 8 each robot 10, 11 comprises a picking device 17, 18. Each picking device 17, 18 comprises for example a gripping means 19, 20 like a needless grip. Instead of a gripping means 19, 20 also a suction means like a Bernoulli gripper may be comprised by each picking device 17, 18. The respective gripping means 19, 20 or suction means is, in this embodiment, adapted to separate the top fiber ply 8 from the stack 16, so that only one fiber ply is picked and moved. The picking devices 17, 18 are arranged at respective movable arms 21, 22 of each robots 10, 11. The arms 21, 22 are, in the example via optional intermediate arms, arranged at further movable arms 23, 24, which arms 23, 24 are arranged at respective bases 25, 26, by which the robots 10, 11 are arranged and guided on the tracks 12, 13. Each robots 10, 11 therefore is a multi-axis robot, comprising several pivot axes for the arms and, if need be, one or more vertical axes for rotating around this vertical axis. The degrees of freedom are chosen such that it is possible to perfectly adapt and position the respective picking device 17, 18 for picking the respective fiber ply 8 and for positioning it at the mold surface 3.

A control device 27 is provided and is adapted to control both robots 10, 11 and the respective drive means like motors for moving the robots 10, 11 between the picking position in the picking zone 14 and the placing position at the mold 2 along the tracks 12, 13. The control device 27 is adapted to exactly calculate the position where the ply 8 needs to be arranged on the mold surface 7 and the already previously placed fiber plies for realizing a sufficient overlap etc. As shown in figure 1, the fiber ply 8 extends nearly from 1 longitudinal side 3 to the other longitudinal side 4 and therefore has a respective length, while it is, seen in the spanwise direction, relatively small. A large number of such separate fiber plies therefore needs to be positioned and arranged in an overlapping and stacked manner for building the preform element. The control device 27 is adapted to control the whole gripping and positioning process, so that each singled fiber ply 8 is exactly positioned within the whole ply arrangement on the mold 2. The control device 27 is further adapted to control the respective picking devices 17, 18 for picking and releasing a fiber ply 8. It is therefore adapted to for example control of the suction means for plying a vacuum or the gripping means like the needle grippers for gripping the ply 8. The suction or gripping means are exactly positioned via the robots 10, 11 to grip the respective edges 28, 29 of the fiber ply 8.

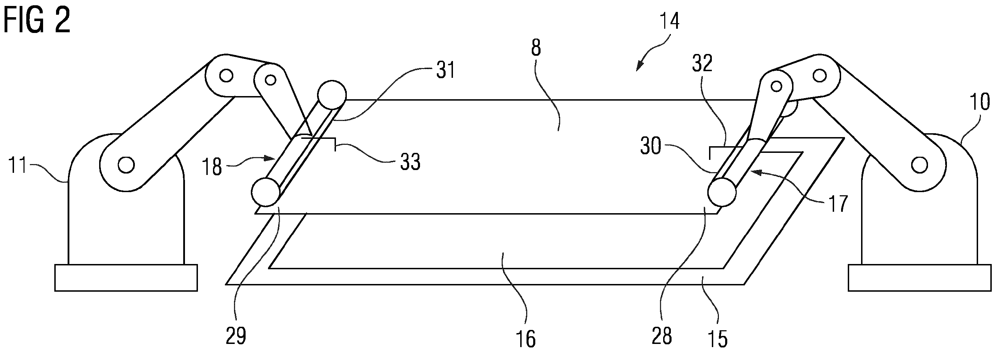

Fig. 2 shows both robots 10, 11 arranged in the picking zone 14. They are arranged at opposite sides of the carrier 15 on which the stack 16 of the fiber plies 8 is arranged. As shown, both picking devices 17, 18 have already gripped the fiber ply 8 at its edges 28, 29 and have lifted and therefore separated the top fiber ply 8 from the stack 16. The control device 27 is adapted to control the movement of the robots 10, 11 and the picking devices 17, 18 such that they are perfectly positioned relative to the top fiber ply 8 to be picked. This can be realized based on reference frames that are calibrated using probing and/or imaging calibration or other calibration methods. Computer vision and/or laser scanners or the like for detection and calibration of the geometric relation between that fiber ply 8, the carrier and the robots 10, 11 can be used.

After gripping the fiber ply 8, both robots 10, 11 or their drive means are controlled by the control device 7 to move in a synchronized movement along the tracks 12, 13 to the calculated placing position along the mold 2, where both robots 10, 11 stop. The control device 27 now controls the drive means of the respective arms of the robots in order to lower the gripped fiber ply 8 on the mold surface 7. After placing the fiber ply 8 the control device 27 controls the gripping devices 17, 18 to release and to move back to the gripping zone 14 for gripping the next fiber ply 8.

Fig. 2 shows both picking devices 17, 18 being equipped with a heating means 30, 31, which is also controlled by the control device 27. This heating means is adapted and used for locally applying heat to the fiber ply 8 after placing it in its final position on the mold surface 7. Usually, the fiber plies 8 comprise a binder coating or something similar. This binder coating can be activated by applying heat. The binder melts and gets sticky, which allows for fixing the locally heated fiber ply to a fiber ply 8 underneath, which may also be heated, so that both are locally fixated to each other. This secures the placed fiber plate 8 in its position, so that, by continuously enlarging the fiber ply arrangement on the mold surface 7, the arrangement is completely fixated by these local welding spots. The heating devices 30, 31 may for example be conduction heating devices or ultrasound heating devices or the like. Any device which is adapted to locally heat the fiber ply 8 and activate or soften the binder and perform this spot welding is appropriate.

Further the principal schedule of fig. 2 shows that each picking device 17, 18 is further equipped with grippers 32, 33 adapted to grip three-dimensional elements like core elements made from balsa wood or foam or the like, which may also be arranged on the mold surface 7 or within the ply arrangement. These grippers 32, 33 may be tongs or comparable gripping means, while also suction elements and/or needle grippers are suitable for gripping the respective element.

So, each of the gripping devices 17, 18 serves several purposes, as they allow for gripping the fiber ply 8 by means of the gripping means 19, 20 or the suction means, for locally heating the positioned fiber ply 8 by the heating means 32, 33 and for gripping three-dimensional elements with the grippers 32, 33. Therefore, multifunctional picking devices 17, 18 are used.

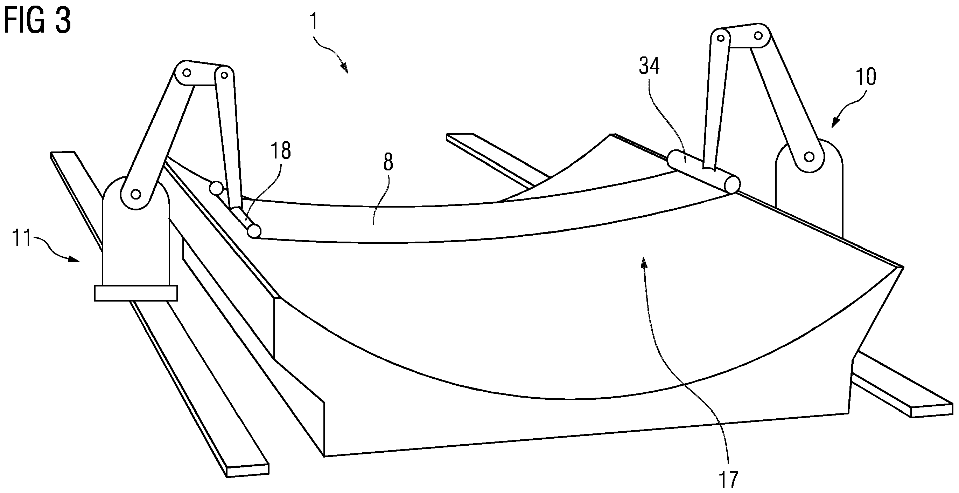

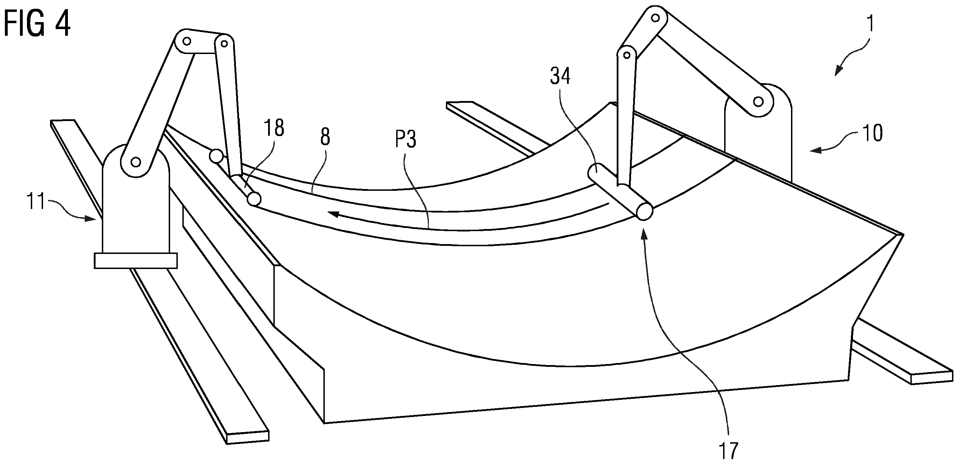

Fig. 3 and 4 show a mold arrangement 1, which has a set up comparable to the mold arrangement 1 of fig. 1. The only difference is that in this embodiment the robots 10 is equipped with a picking device 17, which, in addition to the described embodiment according to fig. 2, is additionally equipped with a shaping tool 34. This shaping tool 34 can for example be a rolling tool comprising a flexible roller, which may be separately arranged at the gripping device 17. This shaping tool 34 may for example be movable between a non-use position and a use position, in which it contacts the previously arranged fiber ply 8. In an alternative, the end section of the picking device 7 may be shaped to a rounded form, so that it can contact the fiber ply 8 and slide over it. However, the shaping tool 34 is realized, the shaping tool 34 is moved along the fiber ply 8 from one end to the other, as shown in fig. 3 and 4 and depicted by the arrow P3. With this shaping tool 34 the arranged fiber ply 8 can be consolidated or draped for smoothening and ensuring a mold conformity, especially in the central part of the fiber ply 8 away from its ends 28, 29.

In this embodiment only the picking device 17 is equipped with such a shaping tool 34. This is sufficient, when the robot 10 is adapted to move the picking device 17 respectively they shaping toll 34 from one longitudinal side to the other. Certainly, also the other picking device 18 arranged at the other robot 11 may be equipped with such a shaping device 34.

The picking device 17, therefore, serves a further purpose compared to the picking device 17 of fig. 2, as it allows for picking the fiber ply 8, for locally heating the fiber ply 8, for picking and additional element like a core element, and, finally, for consolidating and draping the arranged fiber ply 8.

When only one picking device, for example the picking device 17, is equipped with such a shaping tool 34, the picking device 17, after positioning the fiber ply 8, releases the edge 28 of the fiber ply, while the picking device 18 still fixates the edge 29. After releasing the fiber ply 8 the shaping device 34 is moved by the robots 10 in the chordwise direction along the fiber ply 8 and consolidates or drapes it.

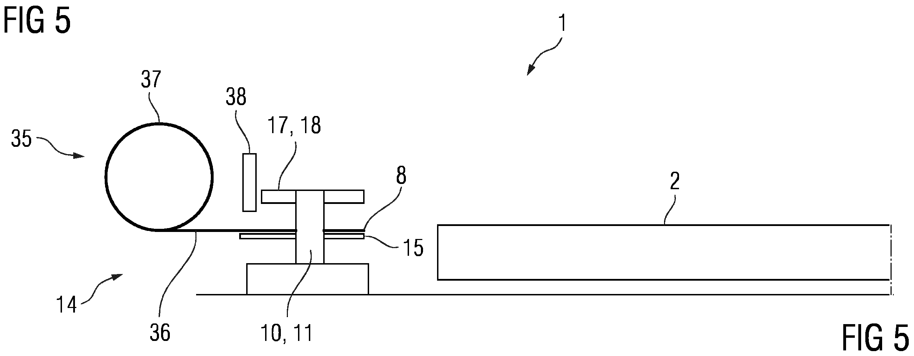

Finally, fig. 5 shows another embodiment of a mold arrangement 1. It comprises the mold 2, which is comparable to the mold 2 of the previous embodiments. It further comprises two robots 10, 11, one of which is shown in fig. 5. In the shown situation, both robots 10, 11 are arranged in the picking zone 14, which picking zone 14 comprises a supply device 35, from which a fiber material 36, which is wound into a roll 37, is unwound and delivered to the carrier 15. Further a cutting device 38 it is provided, which is adapted to cut the respective fiber plies 8 from the endless fiber material 36. The fiber plies 8 are, after cutting, arranged on the carrier 15 and can then be gripped by the picking devices 17, 18 of the robots 10, 11 and transported to and placed at the mold as previously described.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Mold arrangement for manufacturing preform elements for a wind turbine blade, comprising a mold (2) having a mold surface (7) and two longitudinal sides (3, 4), on which mold surface (7) fiber plies (8) adapting to the shape of the mold surface (7) are arranged by means of a controllable pick-and-place device (9), and which pick-and-place device (9) comprises at least two separate robots (10, 11) arrangeable in a picking zone (14) at opposite sides of a fiber ply (8) to be arranged on the mold surface (7), each robot (10, 11) comprising a picking device (17, 18) for picking the fiber ply (8), wherein both robots (10, 11) are movable from the picking zone (14) to the mold (2) and along the longitudinal sides (3, 4) of the mold (2) to a placing position, wherein the robots (10, 11) are adapted to place the picked fiber ply (8) on the mold surface (7).

2. Mold arrangement according to claim 1, **characterized in that** the pick-and-place device (9) comprises four robots, with two robots arranged on each side.

3. Mold arrangement according to claim 1 or 2, **characterized in that** the picking zone (14) comprises a carrier (15) on which a stack comprising several fiber plies (8) is arranged.

4. Mold arrangement according to claim 1 or 2, **characterized in that** the picking zone (14) comprises a supply device (35) for supplying a fiber material (36) and a cutting device (38) for cutting the fiber plies (8) from the fiber material (36).

5. Mold arrangement according to one of the preceding claims, **characterized in that** the picking device (17, 18) comprises suction means or gripping means (19, 20) for picking a fiber ply (8).

6. Mold arrangement according to one of the preceding claims, **characterized in that** at least one robot (10, 11) comprises a shaping tool (34) movable by the robot (10, 11) in a chordwise direction over the arranged fiber ply (8) for draping and/or consolidating the arranged fiber ply (8) or fiber plies (8).

7. Mold arrangement according to claim 5, **characterized in that** the picking device (17, 18) comprises the shaping tool.

8. Mold arrangement according to one of the preceding claims, **characterized in that** at least one robot (10, 11) comprises a heating device (30, 31) for locally applying heat to an arranged fiber ply (8).

9. Mold arrangement according to claim 8, **characterized in that** the heating device (30, 31) is arranged at the picking device (17, 18).

10. Mold arrangement according to one of the preceding claims, **characterized in that** the picking device (17, 18) is adapted to also pick three-dimensional elements to be arranged on the mold surface (7) or the arranged fiber plies (8).

11. Mold arrangement according to one of the preceding claims, **characterized in that** the robots (10, 11) are arranged on tracks (12, 13) extending from the picking zone (14) to the mold (2) and along the longitudinal sides (3, 4) of the mold (2).

12. Mold arrangement according to one of the preceding claims, **characterized in that** a control device (27) is provided for controlling the robots (10, 11).
